(19) Europäisches Patentamt
European Patent Office
Office européen des brevets

(11) **EP 2 360 509 A1**

(12) **EUROPEAN PATENT APPLICATION**

(43) Date of publication:
**24.08.2011 Bulletin 2011/34**

(51) Int Cl.:
***G02B 27/01*** *(2006.01)*      ***G02B 5/18*** *(2006.01)*

(21) Application number: **10275007.2**

(22) Date of filing: **25.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **BAE Systems PLC
London SW1Y 5AD (GB)**

(72) Inventor: **The designation of the inventor has not yet been filed**

(54) **Projection display**

(57)    The present invention relates to a projection display 10 for displaying an image to a viewer, comprising a curved waveguide 14 made of light transmissive material and having first and second opposed curvilinear surfaces 26, 28, an image-providing light source device arranged to inject collimated image bearing light into the waveguide, an input grating 20 coupled to or within the waveguide to diffract said image bearing light to propagate internally along the curved waveguide by total internal reflection, an output grating 22 provided along a side of the waveguide by which the image bearing light is diffracted out of the waveguide for viewing by the viewer, wherein the input grating and output grating have variable pitch gratings so that a collimated image injected into the waveguide can be output from the waveguide as a collimated image having an increased exit pupil.

FIG. 7

EP 2 360 509 A1

**Description**

The present invention relates to a projection display comprising a curved waveguide and also although not exclusively to a helmet or head mounted curved waveguide display, incorporated into a visor.

Known helmet or head worn displays use flat waveguides which act as a combiner and to expand the small exit pupil of the image source. In such optical systems the waveguides contain no optical power apart from the linear diffractive power of the gratings that are used to inject light into and out of the waveguides.

Such displays are essentially eyepiece designs that require the addition of an optical module and combiner to the head or helmet of the user. This is undesirable for many reasons. The addition of mass and volume to head/helmet mounted display is well understood to be problematic. The use of a glass waveguide combiner in front of the user's eye presents many problems with safety.

The ability to use a visor as a waveguide display would over come such problems. Alternatively the use of the same structure as a goggle or a pair of spectacles would also prove advantageous.

The present invention provides a projection display for displaying an image to a viewer, comprising a curved waveguide made of light transmissive material and having first and second opposed curvilinear surfaces, an image-providing light source device arranged to inject collimated image bearing light into the waveguide, an input grating coupled to or within the waveguide to diffract said image bearing light to propagate internally along the curved waveguide by total internal reflection, an output grating provided along one of the surfaces of the waveguide by which the image bearing light is diffracted out of the waveguide for viewing by the viewer, wherein the input grating and output grating have variable pitch gratings so that a collimated image injected into the waveguide can be output from the waveguide as a collimated image having an increased exit pupil.

Accordingly, the projection display may be incorporated into a curved visor or helmet which is head mounted so that an additional optical module and combiner is not required, reducing weight and head manoeuvrability.

The pitches of the input grating and the output grating may vary in accordance with the radius of curvature of the first and second curvilinear surfaces of the waveguide.

The pitch of the input grating may increase in a propagation direction and the pitch of the output grating may decrease in a propagation direction. The pitch of the input and output gratings may vary linearly in the propagation direction, or alternatively have a polynomial variation in the propagation direction.

The pitches of the gratings may also vary according to the thickness of the visor between first and second opposed curvilinear surfaces.

The output grating may output rays at a plurality of angles of incidence, the rays outputted at any one angle of incidence being collimated to provide an extended field of view.

The input and output gratings may have conjugated diffractive power to correct chromatic aberration.

The input grating may be configured according to the curvature of the input grating, and the curvilinear surfaces of the waveguide to provide a continuous wave at the output grating and the output grating may be configured according to the curvature of the output grating to provide a collimated image across the exit pupil.

The waveguide is preferably cylindrical and has curvilinear surfaces with generally equal radiuses of curvature. The surfaces are preferably parallel in that the surfaces are either both convex or both concave.

The present invention also provides a head mounted display, a helmet mounted display, pair of goggles, or spectacles comprising or incorporating the projection display as described above.

In order that the present invention may be well understood, some embodiments thereof, which are given by way of example only, will now be described with reference to the accompanying drawings, in which:

Figure 1 shows a curved, or cylindrical, waveguide display in the form a visor work by a user;
Figure 2 shows a cylinder waveguide with prior art input and output gratings;
Figure 3 shows schematically the waveguide and prior art gratings in Figure 2 with exemplary optical rays coupled into and out of the waveguide;
Figure 4 shows a plot of the angle of incidence along the waveguide of image bearing light coupled into the waveguide by the prior art input grating;
Figure 5 shows in more detail the output light from the waveguide and gratings shown in Figure 4.
Figure 6 shows a plot of the angle of incidence along the exit pupil of image bearing light coupled into and out of the waveguide by the prior art input and output gratings;
Figure 7 shows the cylindrical waveguide display shown in Figure 1;
Figure 8 shows image bearing light coupled into and out of the cylindrical waveguide display shown in Figure 1;
Figure 9 shows a plot of the angle of incidence along the waveguide of image bearing light coupled into the waveguide of the display shown in Figure 1;
Figure 10 shows a plot of the angle of incidence at the exit pupil of light coupled out of waveguide of the display shown in Figure 1;

Figure 11 shows the Figure 1 display modified to allow an increased field of view at the exit pupil;
Figure 12 shows a plot of the angle of incidence at the exit pupil of light coupled out of waveguide of the display shown in Figure 11;
Figure 13 shows the Figure 1 display modified to correct for chromatic aberration at the exit pupil; and
Figure 14 shows a plot of the angle of incidence at the exit pupil of light coupled out of waveguide of the display shown in Figure 13.

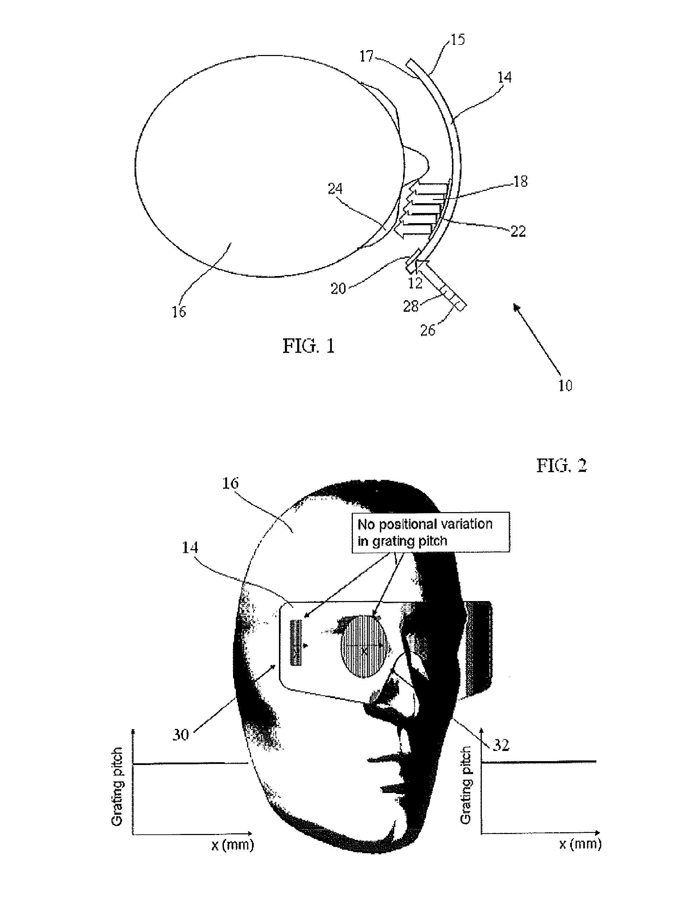

Referring to Figure 1, a device 10 is shown which allows a collimated image 12 to be injected into a curved cylindrical waveguide 14, which may be a visor of a helmet, goggle or spectacle, made of light transmissive material such as glass or plastics. The cylindrical waveguide has first and second opposed curvilinear surfaces 15, 17. The term cylindrical means that the curvilinear surfaces have equal radius of curvatures, or are closely matched in radius, such that the surfaces have generally equal and opposite optical power along their lateral extent between the input and output gratings.

The image is output to the eye of a user 16 as a collimated display 18 with an expanded exit pupil. The collimated image 12, which has a small exit pupil and a large field of view, is injected into the cylindrical waveguide 14. An input grating 20 is arranged to trap the image bearing light within the waveguide under total internal reflection (TIR). Thus the image bearing light travels along the waveguide reflecting internally from opposing sides of the waveguide until it is incident upon an output grating 22 that outputs the image to the user's eye 24. The output grating acts as a combiner for the display combining the injected image over laid on a scene viewed by the user through the grating 22. Due to the multiple interactions with the output grating the image has an expanded exit pupil. The device can produce a large field of view and across a finite input exit pupil. The image can also be chromatically corrected.

The image-providing light source device includes an image generating light source 26 preferably in the form of a micro-display to provide a display of information. Additionally the image-providing light source device includes an optical means 28 located between the image generating light source 26 and the first side 15 of the cylindrical waveguide 14. The optical means 28 is operable to collimate light received from the image generating light source 26 and inject the collimated image bearing light into the waveguide 14 through the first side 15 thereof. The optical means 28 preferably is of a small size, typically less than 25 millimetres in diameter, and is used to collimate the light received from the image generating light source 26. The collimated light produced by the optical means 28 has a small exit pupil and is therefore fed into the waveguide 14 which performs the function of stretching the horizontal and vertical pupils.

Successful collimation of the image at the output grating 22 requires a continuous wavefront of light along its length. This wavefront must be continuous at the output grating regardless of the position of the ray at the input pupil and its position within the field of view of the display. In known waveguide display devices, the waveguide or waveguides have a substantially rectangular cross-section so that the relative field angles of the light incident on opposing parallel sides of the waveguide during propagation are preserved within the waveguide and the information required to regenerate the original image is thus preserved.

Unlike the uniform rectangular cross-section waveguide in known display devices, in device 10, the waveguide 14 has cylindrical optical power at each interaction along its length. Figure 2 shows a typical prior art input grating 30 and output grating 32 in combination with a cylindrical waveguide such as a visor. It can be assumed that this cylindrical optical power is negligible since the size and shape of the human face requires the curvature of the cylinder to be large, in the order of 100mm. However, given a representative radius of curvature, analysis shows that this optical power is enough to give a discontinuous wavefront at the output grating. The gratings have a linear diffractive power as shown by the two graphs which illustrate that the grating pitch is constant across each of the gratings. Accordingly, if a collimated beam of light were injected into a cylindrical waveguide via input grating 30 and output similarly via a output grating 32 and these gratings have a linear diffractive power, as in the prior art, then collimation is lost at the eye.

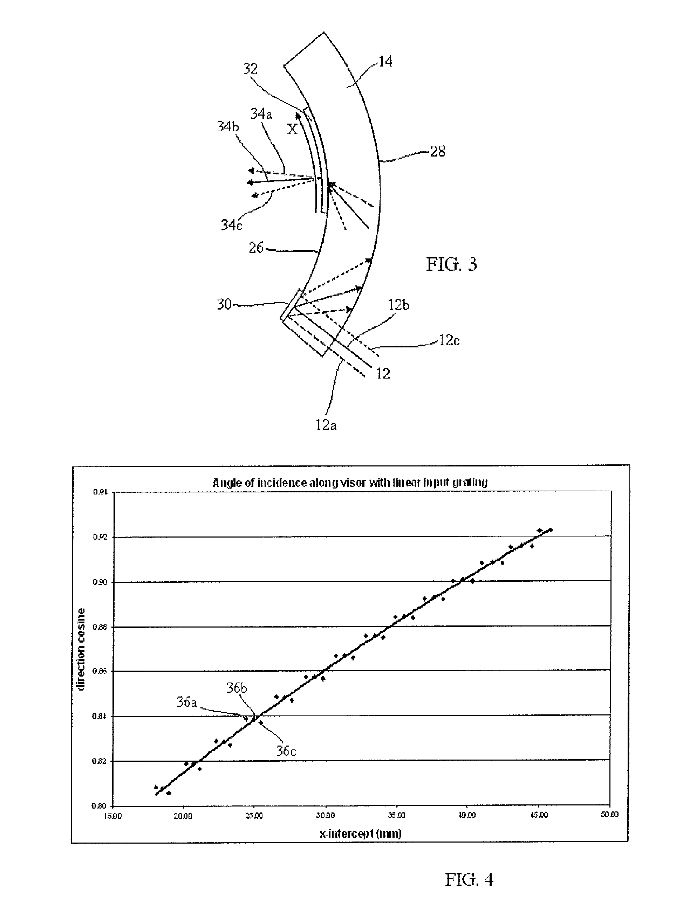

Figure 3 shows in more detail the arrangement shown in Figure 2 having a cylindrical waveguide 14 with known input and output gratings indicated at 30 and 32. As shown in Figure 3, the collimated injected beam of light 12 experiences alternating divergent and convergent focusing power as it totally internally reflects at respective surfaces 26, 28 of the waveguide 14. Figure 3 shows three collimated rays 12a, 12b, 12c of the input image 12 injected into the cylindrical waveguide 14. Due to the curvature of the input grating 30 at surface 26, the three rays are diffracted at different divergent angles into the waveguide. Subsequently, the rays are internally reflected along different convergent angles at surface 28. The rays are outputted from the waveguide by diffraction by the output grating 32. The output rays 34a, 34b, 34c have an output angle which is dependent on the angle of incidence of the rays 36a, 36b, 36c within the waveguide and the output grating 32. Since each of the three rays 36a, 36b, 36c propagate along the waveguide at different angles they each have different angles of incidence with the output grating.

In prior art rectilinear waveguides conjugated pairs of gratings are used, such that the diffractive power and dispersion of the first grating cancels that of the second grating. The waveguide itself contains no optical power and acts purely to expand the exit pupil and as a combiner to overlay the image on the outside world. However, as shown in Figure 3 and as discussed in more detail below, both the waveguide and paired gratings contain optical power. It is therefore necessary to replicate the conjugated nature of the holograms, such that input and output gratings cancel the optical power contained in the system to present collimated light to the viewer.

Figure 4 shows the angles of incidence that rays 36a, 36b, 36c make with the output grating 32 along its length X. It will be seen that the angle of incidence varies depending on the location X at which the internally propagating rays interact with the output grating 32. Figure 4 clearly shows that at each point on the output hologram there is a range of different angles of incidence.

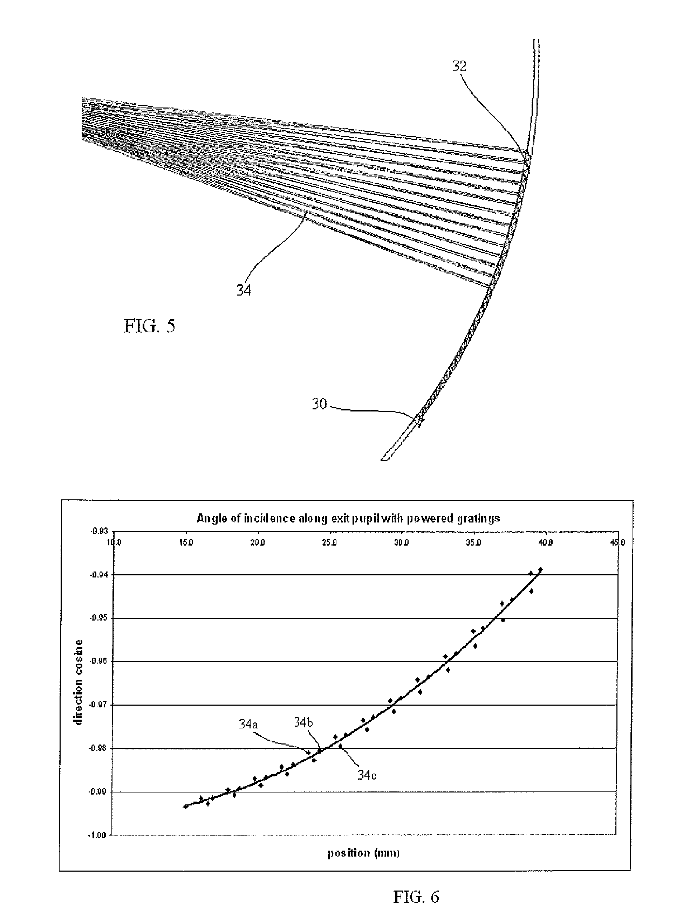

Secondly, the output grating 32 suffers from the optical power introduced by its cylindrical form. This has the effect of introducing a gross divergence across the output pupil of light as shown in Figure 5. Figure 6 shows a final plot of angle of incidence across the exit pupil at the eye. It shows a gross divergence with localised variation in focus across the pupil width.

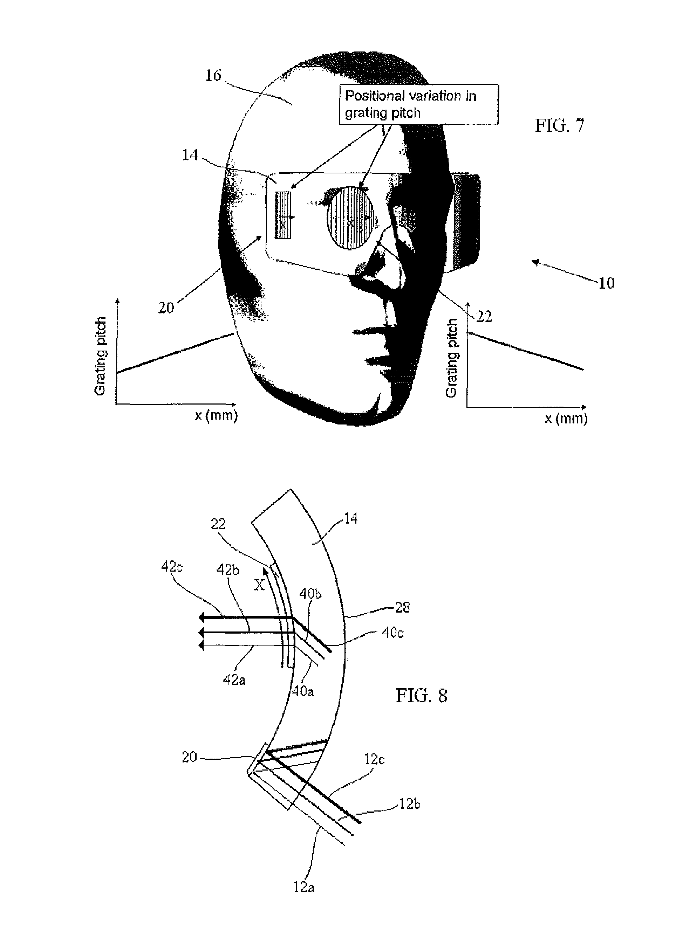

The device 10 as shown in Figure 1 relies on a variation of diffractive power across the input and output gratings to overcome the problems described above. As shown in Figure 7, the fringes of the input grating and the output grating are each arranged to compensate for the curvature of the cylindrical waveguide at the input and output gratings. It will be seen that the fringes of the input and output gratings are each aligned vertically and the pitch is varied horizontally in the direction of propagation. As shown the pitch of the input grating 20 decreases linearly in the lateral direction in the direction of propagation of light. The pitch of the output grating 22 increases linearly in the lateral direction in the direction of propagation of light. It is preferable that the variation in grating pitch has a polynomial function with respect to the lateral dimension across the grating. The exact variation in grating pitch is optimised to suit the exact optical prescription, for example the radius of curvature of the waveguide 14. Typically the pitch can be described by a polynomial law as follows:

$$\text{Grating pitch}(x) = \text{base\_pitch} + \text{coeff}_1.x + \text{coeff}_2.x^2 + ..... + \text{coeff}_z x^z \text{ lines}/\mu$$

Where,

x = position from centre of grating in mm; and.

$\mu$ = the fringes per micron

The coefficients 1-z are calculated using standard available optical design software, and in the present case the fringe pitch variation was determined using ZEMAX® optical design software.

Figure 8 shows in more detail three input rays 12a, 12b, 12c of an image 12 which is input to the waveguide 14. Input grating has a fringe pitch which varies across its lateral extent and diffracts the input rays so that they propagate along the waveguide by TIR. The internally propagating rays 40a, 40b, 40c propagate along the waveguide until they interact with output grating 22 which diffracts the rays of the waveguide as output rays 42a, 42b, 42c. It will be seen that the variable pitch input grating produces a wavefront which is continuous at the output grating regardless of the position of the ray at the input pupil and its position within the field of view of the display.

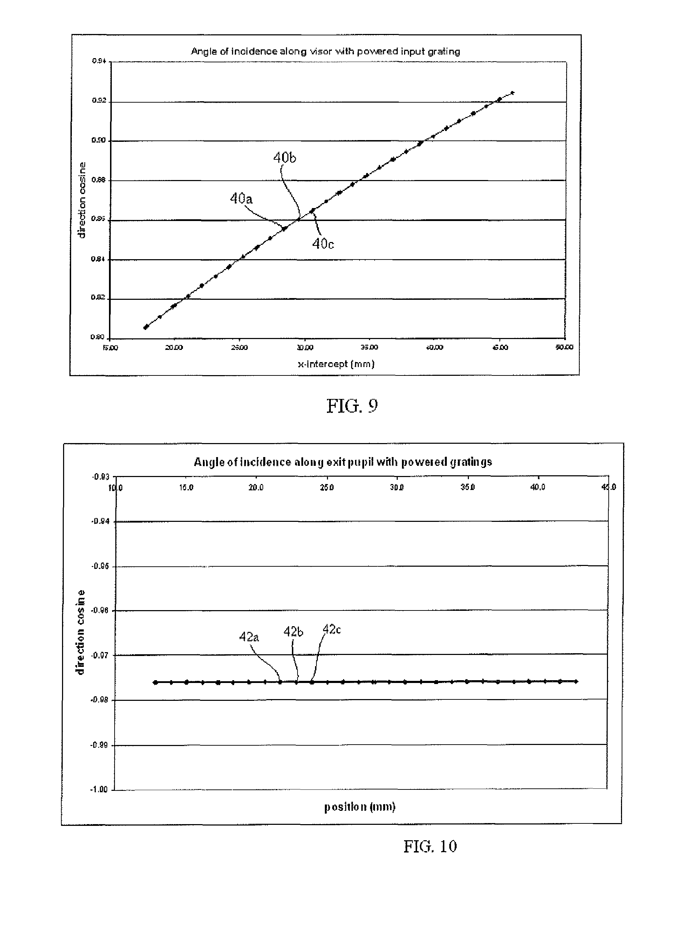

Figure 9 shows a plot of the angle of incidence at the output grating for the three rays 40a, 40b, 40c which shows that the continuous wavefront has been provided at the output grating. As shown in Figure 10, once this continuous wavefront has been achieved the grating pitch across the output hologram 22 is arranged to diffract collimated output rays 42a, 42b, 42c for viewing by user 16 across the exit pupil. Each of the output rays 42a, 42b, 42c have the same angle of incidence.

The device 10 is able to provide an extended filed of view so that image 12 can be viewed from a plurality of different location of the eye of a user relative to the device. Careful optimisation of the radius of curvature of the visor, the thickness of the visor, and the polynomial variation of the grating pitch for the input and output grating allows an extended field of view for a representative optical layout.

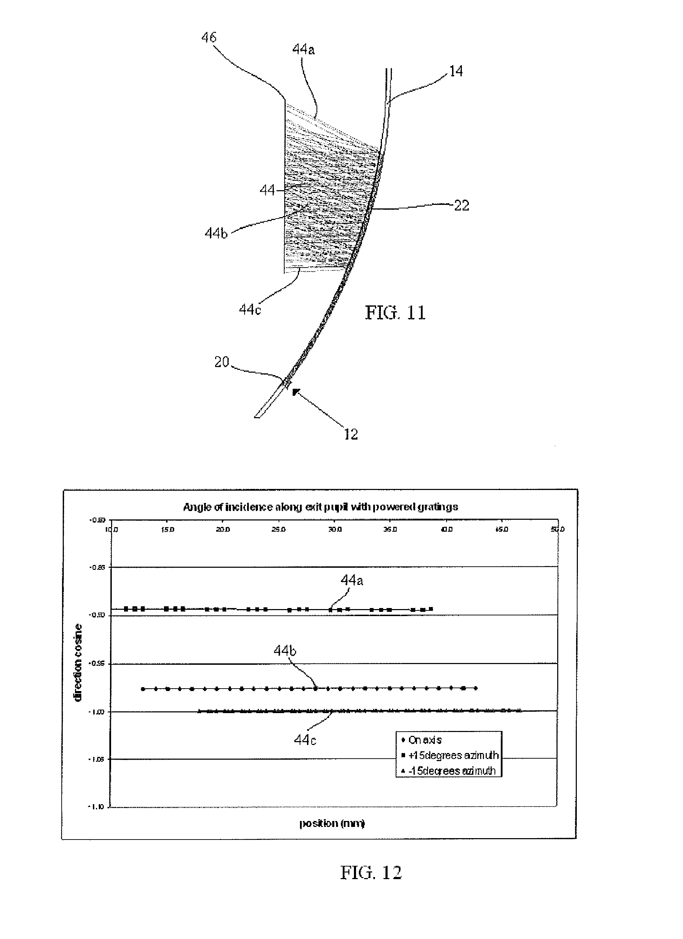

Figure 11 shows the waveguide 14 having an injected image 12 coupled into the waveguide by the input grating 20. The output grating 22 outputs rays 44 at a 30° total field of view having collimated rays 44a (at +15° azimuth), 44b (at 0° on axis) and 44c (at -15° azimuth) at the exit pupil 46. As shown in the plot in Figure 12, each of the output rays 44a, 44b and 44c are collimated allowing viewing of the image at +15° azimuth, on axis and at -15° azimuth.

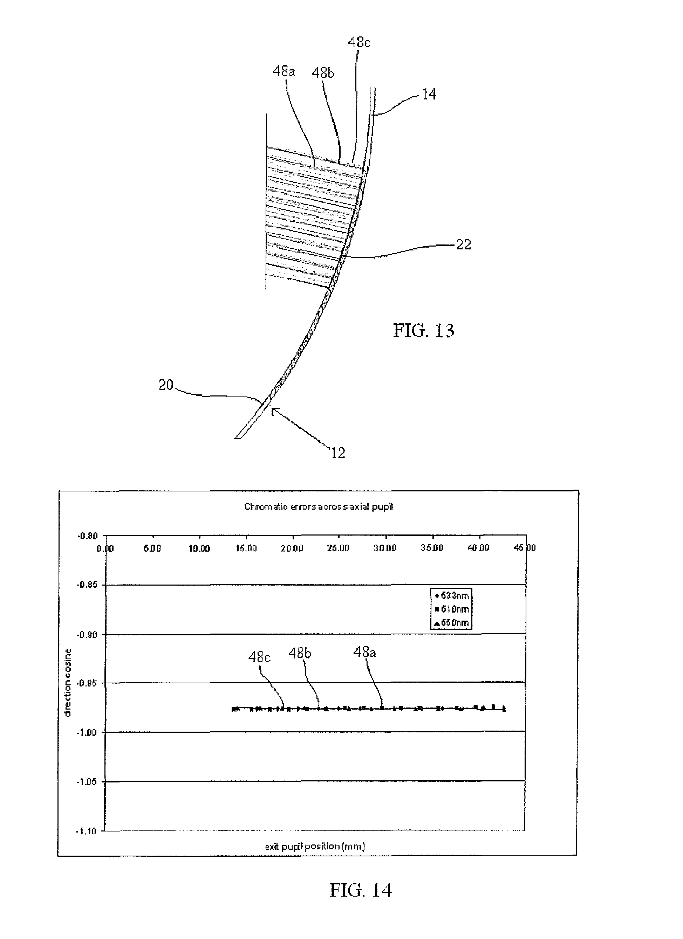

In a further arrangement of the device 10, the input and output diffractive elements 20, 22 have generally conjugated diffractive power to allow chromatic correction to occur between the input and output gratings. The variation of the input and output grating pitch across the visor surface may generate a lack of diffractive conjugation for certain rays. However, suitable optimisation of the radius of curvature of the visor, the thickness of the visor, and the polynomial variation of the grating pitch for the input and output gratings, can minimise chromatic aberration. In this arrangement of the device 10 shown in Figure 13, the waveguide 14 has an injected image 12 coupled into the waveguide by the input grating 20. The output grating 22 outputs rays 48 having three different wavelengths representing 510 nm (48a), 533nm (48b) and 550nm (48c) in the visible spectrum. As shown rays 48a, 48b and 48c are collimated and on axis. As shown in the plot in Figure 14, each of the output rays 48a, 48b and 48c are collimated allowing viewing of the image with good chromatic correction.

## Claims

1. A projection display for displaying an image to a viewer, comprising a curved waveguide made of light transmissive material and having first and second opposed curvilinear surfaces, an image-providing light source device arranged to inject collimated image bearing light into the waveguide, an input grating coupled to or within the waveguide to diffract said image bearing light to propagate internally along the curved waveguide by total internal reflection, an output grating provided along one of the surfaces of the waveguide by which the image bearing light is diffracted out of the waveguide for viewing by the viewer, wherein the input grating and output grating have variable pitch gratings so that a collimated image injected into the waveguide can be output from the waveguide as a collimated image having an increased exit pupil.

2. A projection display as claimed in claim 1, wherein the pitches of the input grating and the output grating vary in accordance with the radius of curvature of the first and second curvilinear surfaces of the waveguide.

3. A projection display as claimed in claim 2, wherein the pitch of the input grating increases in a propagation direction and the pitch of the output grating decreases in a propagation direction.

4. A projection display as claimed in claim 3, wherein the pitch of the input and output gratings varies linearly in the propagation direction.

5. A projection display as claimed in claim 3, wherein the pitch of the input and output gratings has a polynomial variation in the propagation direction.

6. A projection display as claimed in any of the preceding claims, wherein the pitches of the gratings varies according to the thickness of the visor between first and second opposed curvilinear surfaces.

7. A projection display as claimed in any of the preceding claims, wherein the output grating outputs rays at a plurality of angles of incidence the rays outputted at any one angle of incidence being collimated to provide an extended field of view.

8. A projection display as claimed in claim wherein the input and output gratings have generally conjugated diffractive power to correct chromatic aberration.

9. A projection display as claimed in any of the preceding claims, wherein the input grating is configured according to the curvature of the input grating, and the curvilinear surfaces of the waveguide to provide a continuous wave at the output grating and the output grating is configured according to the curvature of the output grating to provide a collimated image across the exit pupil.

10. A projection display as claimed in any of the preceding claims, wherein the waveguide is cylindrical and has curvilinear surfaces with generally equal radiuses of curvature.

11. A head mounted display, a helmet mounted display, pair of goggles, or spectacles comprising the projection display as claimed in any of the preceding claims.

FIG. 1

FIG. 2

No positional variation in grating pitch

Grating pitch

x (mm)

Grating pitch

x (mm)

FIG. 3

FIG. 4

FIG. 5

FIG. 6

Positional variation in grating pitch

FIG. 7

FIG. 8

Angle of incidence along visor with powered input grating

FIG. 9

Angle of incidence along exit pupil with powered gratings

FIG. 10

FIG. 11

FIG. 12

FIG. 13

FIG. 14

Europäisches
Patentamt

European
Patent Office

Office européen
des brevets

## EUROPEAN SEARCH REPORT

**Application Number**

EP 10 27 5007

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2007/029032 A1 (BAE SYSTEMS PLC [GB]; SIMMONDS MICHAEL [GB]; VALERA MOHMED [GB]) 15 March 2007 (2007-03-15) * abstract; figures 2-4 * * claims 11,12 * * page 4, line 15 - page 10, line 22 * | 1-11 | INV. G02B27/01 ADD. G02B5/18 |
| Y | WO 03/010587 A1 (ITT MFG ENTERPRISES INC [US]) 6 February 2003 (2003-02-06) * figures 10A, 10B * * page 11, line 18 - page 13, line 18 * | 1-11 | |
| Y | US 6 728 034 B1 (NAKANISHI HIDEYUKI [JP] ET AL) 27 April 2004 (2004-04-27) * figures 12A, 12B, 19A, 19B * * column 11, line 54 - column 12, line 35 * * column 14, line 64 - column 15, line 39 * | 1-11 | |
| A | WO 2009/101236 A1 (NOKIA CORP [FI]; LEVOLA TAPANI [FI]) 20 August 2009 (2009-08-20) * abstract * * page 9, line 35 - page 13, line 15 * | 1-11 | TECHNICAL FIELDS SEARCHED (IPC) G02B |
| X | EP 2 133 727 A1 (SONY CORP [JP]) 16 December 2009 (2009-12-16) * figures 4,5 * * paragraph [0038] - paragraph [0039] * | 1 | |

The present search report has been drawn up for all claims

| Place of search | Date of completion of the search | Examiner |
|---|---|---|
| Munich | 16 April 2010 | Windecker, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 27 5007

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2010

| Patent document cited in search report | | Publication date | Patent family member(s) | | Publication date |
|---|---|---|---|---|---|
| WO 2007029032 | A1 | 15-03-2007 | US | 2009190222 A1 | 30-07-2009 |
| WO 03010587 | A1 | 06-02-2003 | EP | 1412802 A1 | 28-04-2004 |
| | | | US | 2003020006 A1 | 30-01-2003 |
| US 6728034 | B1 | 27-04-2004 | NONE | | |
| WO 2009101236 | A1 | 20-08-2009 | NONE | | |
| EP 2133727 | A1 | 16-12-2009 | JP | 2009300480 A | 24-12-2009 |
| | | | US | 2009303212 A1 | 10-12-2009 |

For more details about this annex : see Official Journal of the European Patent Office, No. 12/82